# DEMANDE DE BREVET EUROPEEN

(11) **EP 0 790 165 A1**
(43) Date de publication de la demande: **20.08.1997**
(21) Numéro de dépôt: 97400309.7
(22) Date de dépôt: 11.02.1997
(51) Int. Cl.: B60T 7/08

(54) **Frein de stationnement pour véhicule muni d'un contacteur de masse auto-nettoyant**

(30) Priorité: 13.02.1996 FR 9601757
(71) Demandeur: Dura Automotive Systems France, 88360 Rupt sur Moselle (FR)
(72) Inventeur: Blaudez, Yann, 88580 Saulcy sur Meurthe (FR); Belmond, Jean Marc, Nayemont les Fosses, 88100 Saint-Die (FR)
(74) Mandataire: Martin, Jean-Paul

(57) **Abrégé**

Frein de stationnement de véhicule, comprenant un levier manuel (1), un support (2) muni d'un axe (6) sur lequel est articulé le levier, une came (7) montée sur l'axe, solidaire du levier en rotation et liée aux organes de freinage, et un contacteur électrique (15) coopérant avec le levier faisant partie d'un circuit électrique d'allumage d'un voyant (17) de contrôle ; le contacteur comprend une lame métallique conductrice (19) et une garniture isolante (21) enveloppant la lame, dont les extrémités (19a, 19b) dépassent de ladite garniture, ce contacteur étant placé par rapport à la came de telle sorte qu'en position basse du levier le contact électrique entre une extrémité libre (19a) la lame et la came soit coupé et au contraire établi à partir d'un angle donné et cela jusqu'en position haute du levier par frottement de la came sur ladite extrémité libre ; ce contacteur présente l'avantage d'une grande simplicité du fait qu'il est réduit à deux pièces, et est de ce fait peu onéreux et plus fiable grâce au contact par frottement auto-nettoyant entre la lame conductrice et la came (7).

## Description

La présente invention a pour objet un frein de stationnement de véhicule, du type comprenant un levier manuel, un support muni d'un axe sur lequel est articulé le levier, adapté pour pouvoir être fixé au plancher du véhicule, une came montée sur l'axe, solidaire du levier en rotation et liée à un organe de freinage ; le frein comporte également un contacteur électrique coopérant avec le levier, faisant partie d'un circuit électrique d'allumage d'un voyant d'une console, allumé lorsque le levier dépasse une position angulaire déterminée et jusqu'en position haute et le frein en cours de serrage, et éteint lorsque le levier est en dessous de l'angle de contact jusqu'en position basse et le frein en phase de desserrage.

Les contacteurs électriques de masse utilisés jusqu'à présent sur les freins de ce type nécessitent un nombre relativement élevé de pièces : un fil électrique, un ressort, une cosse, (souvent le contact lui-même), un poussoir, des éléments de fixation (visserie).

En raison de cette multiplicité de pièces, le coût du contacteur est relativement élevé. En outre des poussières ou autres impuretés peuvent venir se déposer entre la cosse et le contact mobile, empêchant ainsi l'allumage du voyant lumineux.

L'invention a donc pour but de réaliser un frein pourvu d'un contacteur électrique simplifié de manière à diminuer notablement son prix de revient, et qui en même temps soit d'un fonctionnement plus fiable.

Conformément à l'invention, le contacteur comprend une lame métallique conductrice et une garniture isolante enveloppant la lame, dont les extrémités dépassent de ladite garniture, l'une de ces extrémités est reliée par un fil conducteur à une source d'énergie électrique et au voyant, ce contacteur étant monté sur le support en étant placé par rapport à la came de telle sorte qu'en position basse du levier le contact électrique entre une extrémité libre de la lame et la came soit coupé et au contraire établi à partir d'une position angulaire déterminée du levier et cela jusqu'en position haute du levier par frottement de la came sur ladite extrémité libre et mise à la masse du fil conducteur.

Ainsi la rotation de la came avec l'axe et le levier passant de la position basse à la position haute provoque un frottement de la came sur l'extrémité libre de la lame, ce qui a pour effet de fermer le circuit électrique ou inversement d'ouvrir ce circuit lorsque le levier passe de la position haute à la position basse, tout en nettoyant par frottement le chemin de contact entre l'extrémité libre de la lame et la surface de la came.

La garniture isolante, réalisée en une matière plastique appropriée, assure l'isolation électrique de la lame tout en lui permettant de se fixer mécaniquement sur le support récepteur.

La conception du contacteur conforme à l'invention lui permet donc de regrouper toutes les fonctions d'un contacteur avec deux pièces seulement, la première étant la lame conductrice qui remplit le rôle de contact électrique, de ressort, de piste électrique et de cosse, et la seconde étant la garniture isolante de la lame, qui assure une isolation électrique, le positionnement du capteur ainsi que sa fixation.

Suivant un mode de réalisation de l'invention, la came et l'extrémité libre associée de la lame conductrice sont disposées dans des plans parallèles et contigus, et la dite extrémité libre est cambrée en formant un repli adapté pour glisser élastiquement sur la came en assurant un contact électrique auto-nettoyant.

Grâce à sa simplicité, ce contacteur est de plus très peu onéreux par rapport aux contacteurs classiques.

D'autres particularités et avantages de l'invention apparaîtront au cours de la description qui va suivre, faite en référence aux dessins annexés qui en illustrent deux formes de réalisation à titre d'exemples non limitatifs.

La figure 1 est une vue en perspective à échelle réduite d'une forme de réalisation du frein de stationnement du véhicule conforme à l'invention.

La figure 2 est une vue en perspective éclatée du frein de la figure 1.

La figure 3 est une vue en élévation latérale partielle du frein des figures 1 et 2 sans contact électrique entre la lame du contacteur et la came, lorsque le levier est en position basse.

La figure 4 est une vue de dessus correspondant à la figure 3.

La figure 5 est une vue analogue à la figure 3 montrant la position du frein avec contact électrique franc entre l'extrémité libre de la lame et la came.

La figure 6 est une vue de dessus du frein de la figure 5.

La figure 7 est une vue en perspective à échelle agrandie d'une seconde forme de réalisation du contacteur électrique selon l'invention.

La figure 8 est une vue de face à échelle agrandie du contacteur de la figure 7.

La figure 9 est une vue de dessus du contacteur de la figure 8.

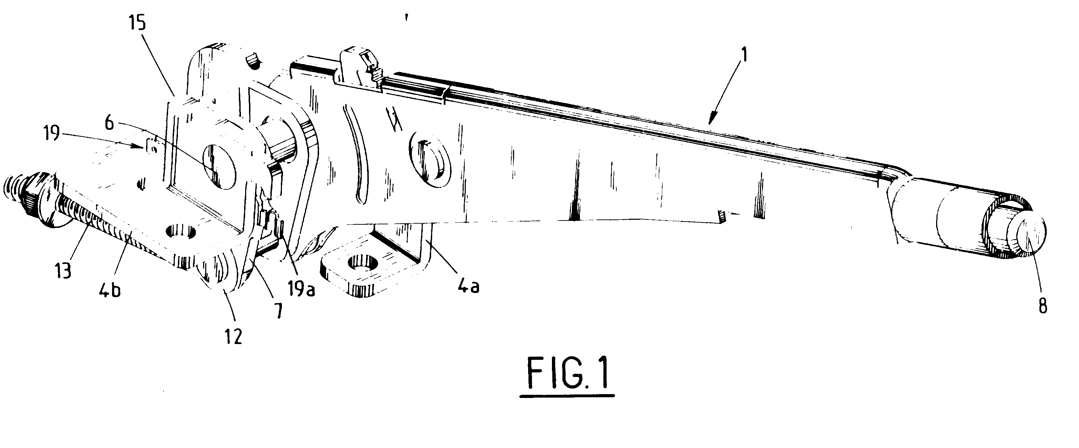

Le frein de stationnement du véhicule représenté aux figures 1 à 6 comprend un levier manuel 1, un support 2 comportant deux flasques parallèles 4a, 4b reliés par une embase 5, un axe 6 porté par les flasques 4a, 4b et dont les extrémités sont à cet effet engagés dans des trous 6a, 6b desdits flasques, et une came 7. Cette dernière est traversée par l'axe 6, montée entre les flasques 4a, 4b et solidarisée en rotation avec le levier 1, qui comporte un poussoir intérieur 8.

Le flasque 4a est prolongé par une partie 9 sur laquelle est agencé un secteur denté 11 sur lequel vient engrener un cliquet 31 qui coopère avec le poussoir 8, pour régler la position angulaire du levier 1. Un tirant 13 vient s'articuler par son extrémité 12 sur un axe 30 traversant la came 7 et fixé à celle-ci. Ce tirant est associé à un palonnier 14 et relié à un organe de freinage non représenté. L'embase 5 du support 2 est adaptée pour pouvoir être fixée au châssis (non représenté) du véhicule.

Le frein comprend également un contacteur électrique 15 relié par un fil électrique 16 à un voyant lumineux 17 placé sur la console du tableau de bord (non représenté) et lui-même relié au pôle + d'une source 18 de courant électrique telle que la batterie du véhicule.

Le contacteur 15 comprend une lame métallique conductrice 19 et une garniture isolante 21, réalisée en une matière plastique convenable, enveloppant la lame 19, dont les extrémités 19a, 19b, dépassent de chaque côté de la garniture 21. L'extrémité libre 19a est cambrée en formant un repli approximativement en forme de V largement ouvert, tandis que l'extrémité opposée 19b est reliée au fil électrique 16.

La garniture isolante 21 est surmoulée sur la lame 19 et adaptée pour pouvoir être montée sur le flasque 4b du support 2, lequel est en contact électrique avec le châssis du véhicule lorsque le frein est monté dans celui-ci.

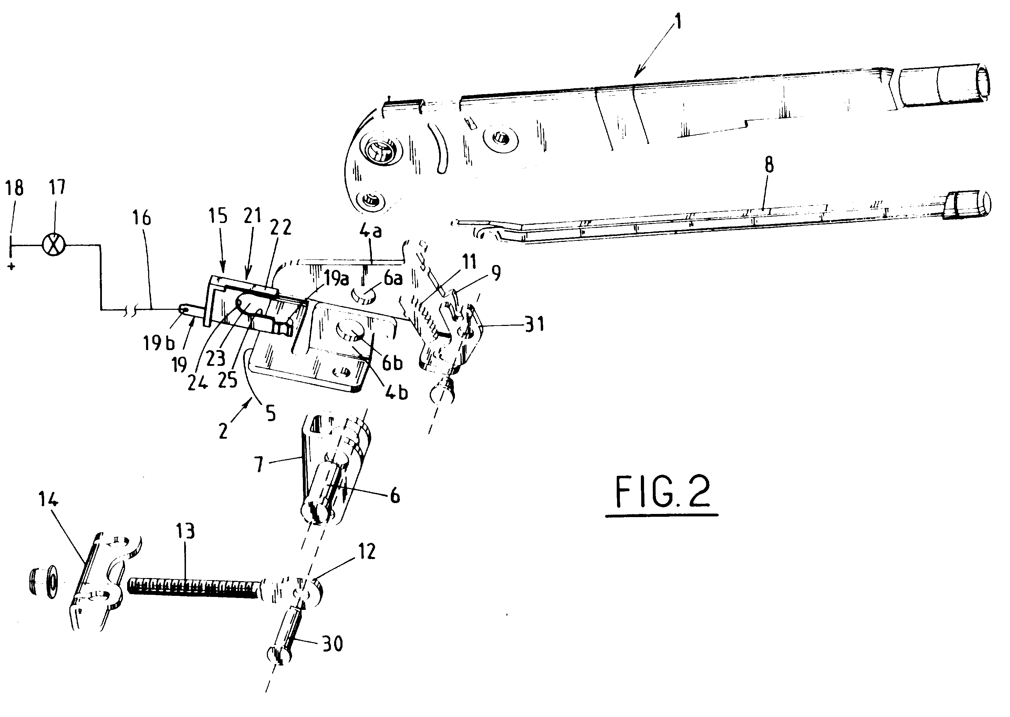

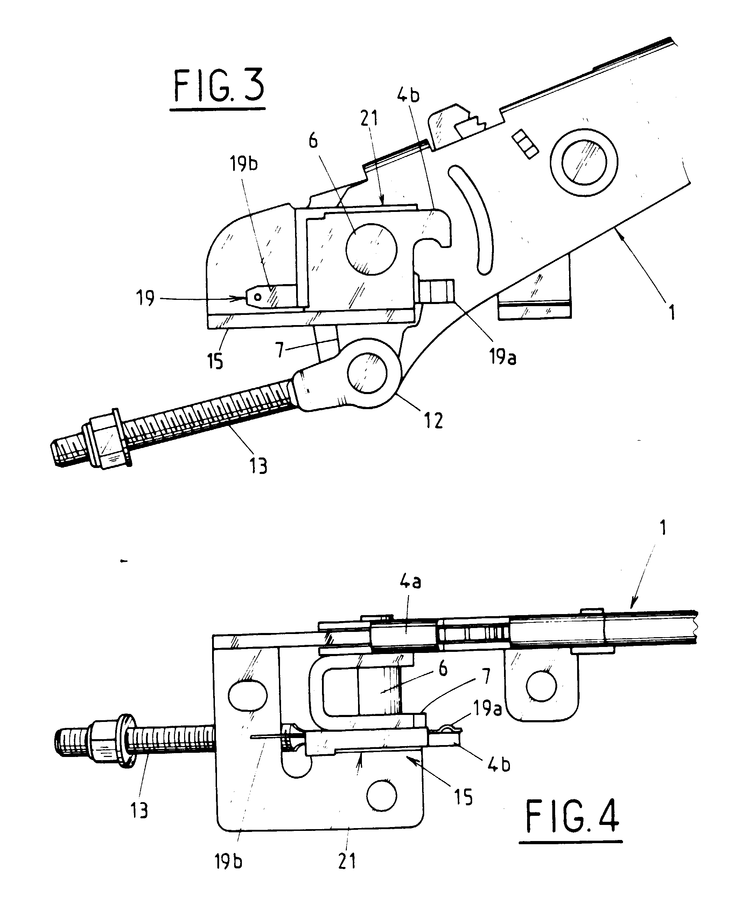

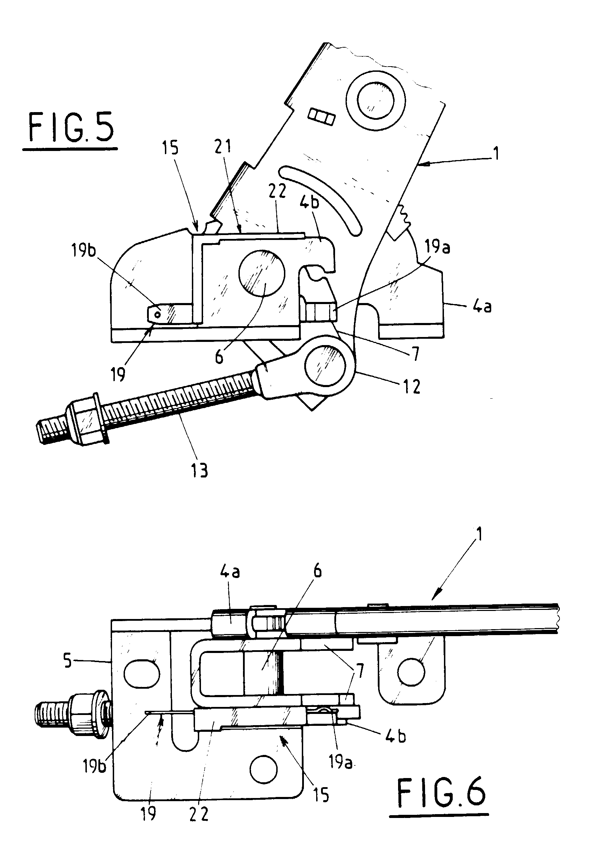

La garniture isolante 21 s'étend dans une direction générale parallèle à la lame 19 qu'elle enveloppe dans sa partie inférieure, et comporte le long de son bord supérieur (figure 2) un rabat 22 à angle droit, adapté pour venir prendre appui sur le bord supérieur du flasque 4b, lorsque la garniture 21 et la lame 19 sont glissées entre le flasque 4b et la came 7 (figures 4 et 6). Dans la garniture 21 est ménagée une découpe 23 profilée sensiblement en U et s'étendant à peu prés parallèlement à la lame 19, avec un fond arrondi 24 du côté de l'extrémité 19b. Le profil de cette découpe 23 est adapté pour venir s'appliquer sur l'axe 6 lorsque le contacteur 15 est monté sur le support 2.

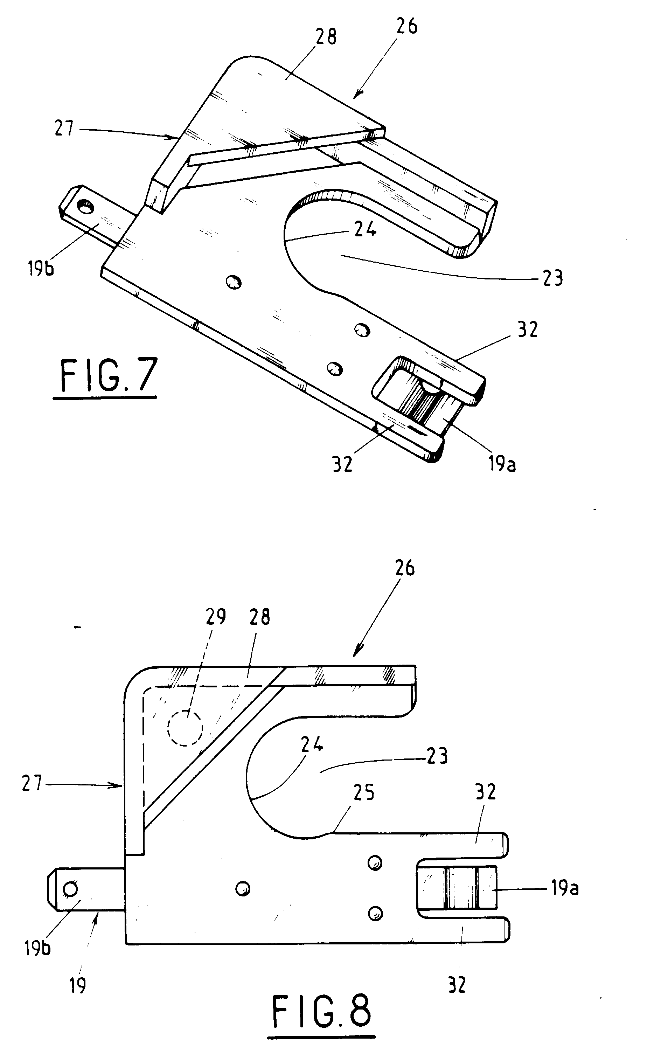

Un moyen de clipsage de la garniture 21 sur l'axe 6 est également prévu, par exemple comme représenté un décrochement 25, visible plus nettement sur la figure 8. Ce décrochement est agencé sur l'une des parois de la découpe 23 à un emplacement approprié pour se trouver positionné juste au-delà de l'axe 6 après emboîtement de la garniture isolante 21 sur ce dernier. Le clipsage ainsi obtenu maintient le contacteur 15 dans la position souhaitée entre le flasque 4b et la came conductrice 7.

Lorsque le frein est assemblé la came 7 et la lame 19 sont disposées dans des plans parallèles contigus, le contacteur 15 étant interposé entre le flasque 4b et la came 7.

Le fonctionnement du frein équipé du contacteur électrique qui vient d'être décrit est le suivant.

En position basse et en position intermédiaire (figures 3 et 4), la came 7 reste au contact uniquement de la garniture isolante 21, sans toucher l'extrémité cambrée 19a de la lame conductrice 19. Le contact électrique n'est donc pas établi et le voyant 17 reste éteint.

Lorsque le conducteur du véhicule continue à relever le levier 1, jusqu'à la position angulaire des figures 5 et 6, la came 6 vient au contact du repli cambré 19a ce qui ferme le circuit électrique, met le fil 16 à la masse via l'axe 6 et le support 2, et provoque l'allumage du voyant lumineux 17. Ce contact produit un frottement autonettoyant entre la surface de la came 7 et l'extrémité libre 19a.

La manoeuvre inverse du levier 1 entraîne la cessation du contact entre came 7 et extrémité 19a de sorte que le courant est coupé et que le voyant 17 s'éteint, le frein étant desserré.

La garniture surmoulée 21 permet de rattraper le jeu entre la came rotative 7 et le support fixe 2, grâce au fait qu'elle est intercalée entre ces deux éléments.

En plus des avantages techniques précédemment indiqués, le contacteur 15 selon l'invention présente celui d'être réduit à deux pièces seulement, à savoir la lame conductrice 19 et la garniture isolante 21. Ceci simplifie considérablement sa fabrication et réduit son coût par rapport à celui des contacteurs classiques.

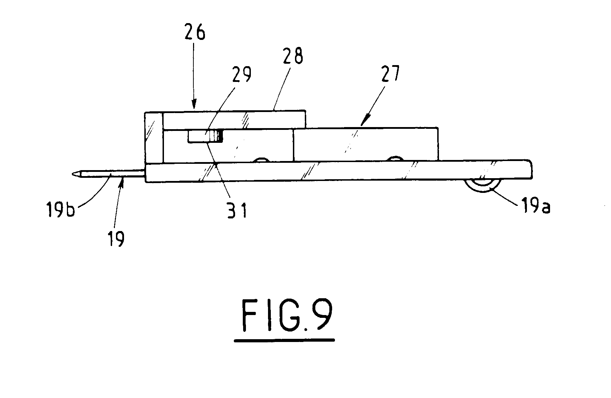

Dans la seconde forme de réalisation du contacteur, illustrée aux figures 7 à 9, le contacteur 26 comporte une garniture isolante 27 pourvue à l'un de ses angles d'une partie creuse 28 formant une sorte de capot, qui peut venir coiffer l'un des sommets du flasque 4b. Le capot 28 est muni d'un téton intérieur 29 pouvant venir se loger dans un trou 31 (figure 9) du flasque 4b, afin de verrouiller la garniture isolante 27 sur ce dernier.

La garniture 27 comprend en outre des moyens de protection de l'extrémité libre 19a de la lame conductrice 19, par exemple comme représenté une paire de pattes 32 s'étendant parallèlement de chaque côté de ladite extrémité 19a.

Ce second mode de réalisation comporte les mêmes avantages que ceux du premier mode de réalisation décrit. En outre l'extrémité cambrée 19a de la lame conductrice 19 est protégée sur ses côtés par les pattes 32 contre les chocs, et le positionnement du contacteur 26 sur la chape 4b est assuré plus fermement grâce au capot triangulaire 28 et à son téton de verrouillage 29, qui complète le clipsage sur l'axe 6 par le décrochement 25.

Le contacteur selon l'invention est susceptible de diverses variantes d'exécution.

## Revendications

1. Frein de stationnement de véhicule, comprenant un levier manuel (1), un support (2) muni d'un axe (6) sur lequel est articulé le levier, une came (7) montée sur l'axe, solidaire du levier en rotation et liée à un organe de freinage, et un contacteur électrique (15; 26) coopérant avec le levier faisant partie d'un circuit électrique d'allumage d'un voyant (17), allumé lorsque le levier est en position haute, et eteint lorsque le levier est en position basse et le frein desserré, caractérisé en ce que le contacteur comprend une lame métallique conductrice (19) et une garniture isolante (21, 27) enveloppant la lame, dont les extrémités (19a, 19b) dépassent de ladite garniture, l'une de ces extrémités étant reliée par un fil conducteur (16) à une source d'énergie électrique et au voyant, ce contacteur étant monté sur le support en étant placé par rapport à la came de telle sorte qu'en position basse du levier le contact électrique entre une extrémité libre (19a) de la lame et la came soit coupé, et au contraire établi à partir d'une position angulaire déterminée du levier et cela jusqu'en position haute du levier par frottement de la came sur ladite extrémité libre, et mise à la masse du fil conducteur.

2. Frein selon la revendication 1, caractérisé en ce que la came (7) et l'extrémité libre associée (19a) de la lame conductrice (19) sont disposées dans des plans parallèles et contigus, et ladite extrémité libre (19a) est cambrée en formant un repli adapté pour glisser élastiquement sur la came (7) en assurant un contact électrique auto-nettoyant.

3. Frein selon l'une des revendications 1 et 2, caractérisé en ce que la garniture isolante (21; 27) est surmoulée sur le support (2) de la lame, ce support étant en contact électrique avec le châssis du véhicule lorsque le frein est monté dans le véhicule.

4. Frein selon la revendication 3, caractérisé en ce que la garniture isolante (21; 27) présente une découpe (23) profilée sensiblement en U avec un fond arrondi (24), adaptée pour venir s'appliquer sur l'axe (6) d'articulation de la came (7) et du levier (1), et un moyen de clipsage de la garniture sur l'axe est prévu, par exemple un décrochement (25) agencé sur l'une des parois de la découpe.

5. Frein selon la revendication 4, caractérisé en ce que la garniture isolante (27) comporte une partie creuse (28) formant capot, venant coiffer un flasque (4b) de la chape et qui est pourvue d'un téton intérieur (29) de verrouillage sur cette dernière.

6. Frein selon l'une des revendications 1 à 5, caractérisé en ce que la garniture isolante (27) comprend des moyens de protection de l'extrémité libre (19a) de la lame conductrice (19), par exemple une paire de pattes (32) s'étendant de chaque côté de ladite extrémité libre.

7. Frein selon l'une quelconque des revendications 3 à 6, caractérisé en ce que le support (2) comporte deux flasques (4a, 4b) portant l'axe (6), en ce que la came (7) est disposée sur l'axe entre les flasques, et le contacteur (15; 26) est monté sur l'un (4b) des flasques en étant interposé entre la came et ledit flasque.
